# EUROPEAN PATENT APPLICATION

(11) **EP 1 063 797 A2**
(43) Date of publication of application: **27.12.2000**
(21) Application number: 00304587.9
(22) Date of filing: 31.05.2000
(51) Int. Cl.: H04H 1/00

(54) **Digital broadcast reception apparatus for retrieving broadcast program information, and computer-readable record medium carrying a computer program allowing a computer to function as a digital broadcast reception apparatus**

(30) Priority: 31.05.1999 JP 15175799
(71) Applicant: Matsushita Electronics Corporation, Kadoma-shi, Osaka 571-8501 (JP)
(72) Inventor: Kawase, Hiroshi, Aichi-ken 490-1107 (JP); Mizuno, Yusuke, Kasugai-shi, Aichi-ken 486-0915 (JP); Hayashi, Tsutomu, Gifu-ken, 501-0563 (JP)
(74) Representative: Crawford, Andrew Birkby

(57) **Abstract**

A digital broadcast reception apparatus which can immediately display program information of the genres the viewer desires in program information searches for digital broadcasts. The control unit 409 extracts channels and genres of the programs from the short program information, and also stores a genre information database which shows relationships between the channels and genres in the storage unit 407. When having received specification of desired genres from the viewer, the control unit 409 searches the long program information for the program information of the channels corresponding to the genres that match the desired genres in the genre information database. The display control unit 406 displays the obtained program information as the search result.

## Description

### BACKGROUND OF THE INVENTION

### (1) Field of the Invention

The present invention relates to a digital broadcast reception apparatus which displays program information viewers desire on a television display, using program information sent with digital broadcast programs.

### (2) Description of the Prior Art

Digital broadcasts provide viewers with a lot of programs through a lot of channels. This makes the viewers feel difficult to select programs.

To help viewers select programs, broadcast stations transmit program information together with digital broadcast programs so that the viewers can search the program information for desired programs. The program information is classified into short program information and long program information. The short program information contains information on a currently broadcast program and the next program. The long program information contains information on programs to be broadcast approximately in a week.

The short program information has a relatively small amount of information and its transmission cycle is short. Accordingly, the reception apparatus performs reception of the short program information, retrieval of program information viewers desire, and display of the retrieved information at high speeds. The short program information, however, fails to meet the viewers' expectations of searching the program information one week ahead.

Though the long program information can provide with the program information one week ahead, it takes a long time for the reception apparatus to receive the information sequentially, retrieve program information of the genres that the viewers desire, and display the retrieved information. That is to say, the long program information cannot be processed at high speeds.

One method to process the long program information at high speeds is to receive the long program information sequentially and prestore it in a storage area of the reception apparatus, and to search the stored program information for desired program information and display the detected information.

To achieve this, however, the reception apparatus is required to prepare a storage area (e.g., a RAM) having a large capacity since the long program information is very large in size. However, many of commercially available digital broadcast reception apparatuses do not have such a large storage area.

In digital broadcasts, it is possible to display a channel list or a channel details information. The channel list introduces channel names. The channel details information introduces the characteristics of each channel. The channel list and the channel details information conform to the SDT (Service Description Table) which is sent from the broadcast stations in the same way as the program information.

There are following problems with the above list and information. The channel list does not show genres of the broadcast programs provided through the channels. Though the channel details information describes the characteristics of each channel, it is difficult to detect the genres of the programs from the description.

### SUMMARY OF THE INVENTION

It is therefore the first object of the present invention to provide a digital broadcast reception apparatus which can display program information of the genres the viewer desires at a high speed without increasing the capacity of the storage area.

It is the second object of the present invention to provide a digital broadcast reception apparatus which displays such a channel list or channel details information as the viewer can recognize the genres of programs broadcast on the channels at a glance.

The first object is fulfilled by a digital broadcast reception apparatus for receiving transport streams, demultiplexing broadcast programs, a present_following_EIT, and a schedule_EIT multiplexed in the received transport streams, and outputting the demultiplexed broadcast programs to an output apparatus, characterized by comprising: an extracting means for extracting channels with corresponding genres of the broadcast programs from the present_following_EIT; a genre receiving means for receiving, from a viewer, specification of a genre of broadcast programs that the viewer wishes to search; a broadcast program information search means for, when any of the genres extracted by the extracting means matches the genre received by the genre receiving means, performing a search of the scheduie_EIT to find program information of broadcast programs belonging to the received genre, the search commencing with channels that corresponds to the matched genre among the channels extracted by the extracting means; and a display control means for allowing the output apparatus to display a result of the search performed by the broadcast program information search means.

With the above construction, it is possible to display broadcast program information of the genres the viewer desires immediately after receiving specification of the genres from the viewer, without increasing the capacity of the storage area.

The above digital broadcast reception apparatus may further comprise: a database in which relationships between the channels and the genres are written, wherein the present_following_EIT is multiplexed into the transport stream together with all broadcast programs, the extracting means extracts genres in correspondence to channels that transfer the broadcast programs, beforehand (1) while broadcast programs are being output, or (2) during standby, and writes the relationships between the channels and the genres into the database, and the broadcast program information search means, when the genre receiving means has received specification of a genres, refers to the database and detects channels to be searched preferentially.

With the above construction, it is possible to respond to the viewer's request quickly since the apparatus can immediately recognize the channels to be searched preferentially by obtaining the relationships between the channels and genres beforehand.

In the above digital broadcast reception apparatus, the broadcast program information search means may include an extraction unit for extracting channels and genres by relating them to each other from the schedule_EIT, wherein the broadcast program information search means writes the channels and the genres related to each other by the extraction unit into the database.

With the above construction, a higher accuracy of the relationships between the channels and genres can be obtained.

In the above digital broadcast reception apparatus, the genre receiving means, when having received a search instruction from the viewer, may instruct the display control means to display a menu screen which shows genres of broadcast programs, and the display control means does not allow the output apparatus to display the result of the search.

With the above construction, the viewer can specify without difficulty the genres for which the viewer desires to obtain the broadcast program information.

In the above digital broadcast reception apparatus, the display control means may start displaying the result of the search as soon as the broadcast program information search means finds program information of a broadcast program belonging to the matched genre.

With the above construction, the viewer can look the program information of the desired programs immediately. That is to say, this is highly effective since information can be displayed before all channels have been searched even if the transmission band allocated to the schedule_EIT is narrow.

The second object is fulfilled by the above digital broadcast reception apparatus further demultiplexing SDTs (Service Descriptor Tables) multiplexed in the received transport streams, and outputting a channel list or channel details information to the output apparatus, the digital broadcast reception apparatus being characterized by further comprising a genre adding means for extracting genres corresponding to channels from the database, and adding genres corresponding to channels contained in the channel list or the channel details information.

With the above construction, it is possible for the viewer to find the target channel at a glance since genres of the channels are displayed on the channel list or channel details information.

In the above digital broadcast reception apparatus, the broadcast program information search means may write the number of genre searches for each genre into the database in correspondence to channels when searching broadcast program information for broadcast programs that belong to the genre specified by the viewer, and the genre adding means extracts a genre having the highest number of genre searches.

With the above construction, it is possible for the viewer to find channels of the genres the viewer often views.

In the above digital broadcast reception apparatus, the broadcast program information search means may arrange the database so that a most recently searched genre can be identified for each channel, and the genre adding means extracts a genre that has been searched most recently from the database.

With the above construction, it is possible for the viewer to find channels of the genres the viewer often views recently.

The above digital broadcast reception apparatus may further comprise: a genre-specific channel table generating means for generating a genre-specific channel table from the database, the genre-specific channel table showing relationships between genres and channels; and a channel list generating means for generating channel lists one by one in correspondence to the genres written in the genre-specific channel table.

With the above construction, it is possible to display the genre-specific channel list.

In the above digital broadcast reception apparatus, the broadcast program information search means may write the number of genre searches for each genre into the database in correspondence to channels when searching broadcast program information for broadcast programs that belong to the genre specified by the viewer, the genre-specific channel table generating means generates the genre-specific channel table by entering information of genres in a descending order of the number of genre searches, and the channel list generating means generates the channel lists for genres one by one in a descending order of the number of genre searches.

With the above construction, it is possible to display the genre-specific channel list.

The above digital broadcast reception apparatus may further comprise: a genre specification receiving means for receiving, from the viewer, specification of a genre corresponding to channel lists that the viewer wishes to diaplay, wherein the channel list generating means reads out channels corresponding to the genre received by the genre specification receiving means, from the genre-specific channel table, and generates channel lists one by one in correspondence to the genre received by the genre specification receiving means.

With the above construction, it is possible to display the channel list for the genres specified by the viewer.

The first object of the present invention is also fulfilled by a computer-readable record medium which is applied to a digital broadcast reception apparatus for receiving transport streams, demultiplexing broadcast programs, present_following_EIT, and schedule_EIT multiplexed in the received transport streams, outputting the demultiplexed broadcast programs to an output apparatus, the computer-readable record medium recording a program that allows a computer to achieve functions of the following means: an extracting means for extracting channels with corresponding genres of the broadcast programs from the present_following_EIT; a genre receiving means for receiving, from a viewer, specification of a genre of broadcast programs that the viewer wishes to search; a broadcast program information search means for, when any of the genres extracted by the extracting means matches the genre received by the genre receiving means, performing a search of the schedule_EIT to find program information of broadcast programs belonging to the received genre, the search commencing with channels that corresponds to the matched genre among the channels extracted by the extracting means; and a display control means for allowing the output apparatus to display a result of the search performed by the broadcast program information search means.

With the above construction, it is possible to allow a digital broadcast reception apparatus to display broadcast program information of the genres the viewer desires at a high speed by applying the record medium to the digital broadcast reception apparatus even if the apparatus itself does not have the function.

The first object of the present invention is also fulfilled by a program which allows a computer to achieve functions of the following means of a digital broadcast reception apparatus for receiving transport streams, demultiplexing broadcast programs, present_following_EIT, and schedule_EIT multiplexed in the received transport streams, outputting the demultiplexed broadcast programs to an output apparatus, the program being achieved by a carrier or a record medium: an extracting means for extracting channels with corresponding genres of the broadcast programs from the present_following_EIT; a genre receiving means for receiving, from a viewer, specification of a genre of broadcast programs that the viewer wishes to search; a broadcast program information search means for, when any of the genres extracted by the extracting means matches the genre received by the genre receiving means, performing a search of the schedule_EIT to find program information of broadcast programs belonging to the received genre, the search commencing with channels that corresponds to the matched genre among the channels extracted by the extracting means; and a display control means for allowing the output apparatus to display a result of the search performed by the broadcast program information search means.

With the above construction, it is possible with the program to provide a digital broadcast reception apparatus which displays broadcast program information of the genres the viewer desires at a high speed.

### BRIEF DESCRIPTION OF THE DRAWINGS

These and other objects, advantages and features of the invention will become apparent from the following description thereof taken in conjunction with the accompanying drawings which illustrate a specific embodiment of the invention. In the drawings:
FIG. 1 shows a data structure of the transport stream received by the digital broadcast reception apparatus of the present invention;
FIG. 2 shows a data format of EIT (Event Information Table) in which the program information used in the digital broadcast reception apparatus of the present invention is written;
FIG. 3 shows one example of genre codes written in user_nibble_1 and user_nibble_2 of the EIT shown in FIG. 2;
FIG. 4 shows the construction of the digital broadcast reception apparatus of the present invention in Embodiment 1;
FIG. 5 shows the genre information database stored in the storage unit of Embodiment 1 and the search order of the long program information;
FIG. 6 shows an example of the menu screen displayed on the display screen of the output apparatus before a search is instructed in Embodiment 1;
FIG. 7 shows an example of the menu screen for genre search in Embodiment 1;
FIG. 8 shows an example of the menu screen on which the viewer instructs a search by setting the small items for genres in Embodiment 1;
FIG. 9 shows a display screen showing a search result of a genre search in Embodiment 1;
FIG. 10 is a flowchart showing the operation in Embodiment 1;
FIG. 11 shows the genre information database stored in the storage unit 407 in Embodiment 2;
FIG. 12 shows the genre-specific channel table generated by sorting channels for each genre of programs based on the genre information database shown in FIG. 11;
FIG. 13 shows a display screen of the channel list displayed on the display of the output apparatus in Embodiment 2;
FIG. 14 shows a display screen of the genre-specific channel list displayed on an external display in Embodiment 2;
FIG. 15 shows a display screen of the channel details information displayed on the display of the output apparatus in Embodiment 2; and
FIG. 16 is a flowchart showing the operation in Embodiment 2.

### DESCRIPTION OF THE PREFERRED EMBODIMENTS

Prior to description of the embodiments of the present invention, the data structure of the transport stream received by the digital broadcast reception apparatus of the present invention will be described.

In digital broadcasts, transport stream packets conforming to the MPEG2 standard are generated and transmitted. Each transport stream packet contains a plurality of time-division-multiplexed streams including: streams of compressed digital images and sounds for a plurality of programs; and data streams including program specific information (PSI) and service information (SI).

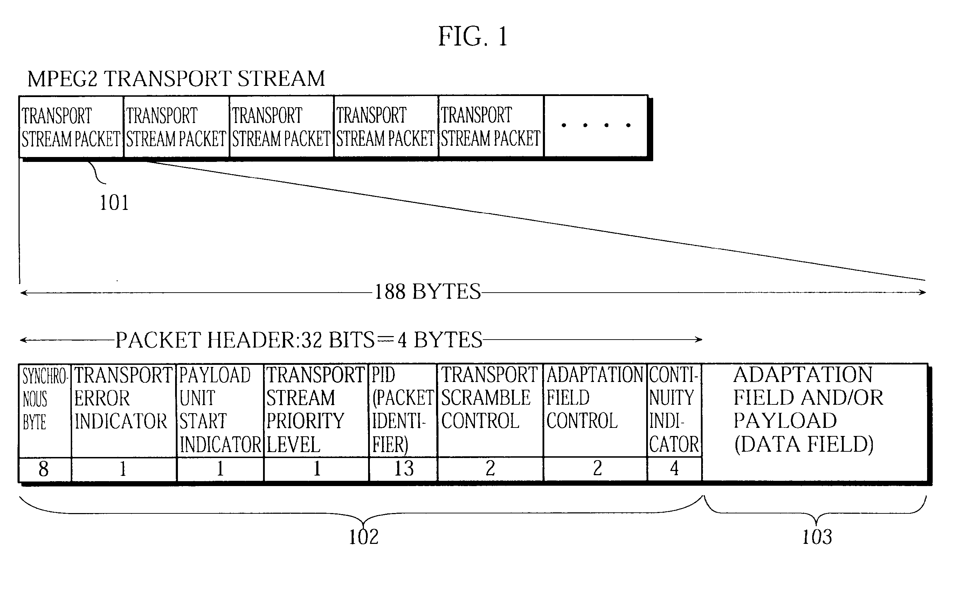

FIG. 1 shows the data structure of the MPEG2 transport stream. The MPEG2 transport stream is composed of separable 188-byte transport stream packets. A transport stream packet 101 is composed of a packet header 102 and an adaptation field and/or payload (data field) 103.

The packet header 102 has fixedly four bytes. Each field of the packet header 102 is defined as follows.

Synchronous bytes are data used for detecting the start of the transport stream packet.

A transport error indicator indicates whether the current packet includes an error.

A payload unit start indicator indicates the start of a unit, which means a new packet start from the payload of the transport stream.

A transport stream priority level indicates the priority level of the packet.

A PID (Packet IDentifier) is identification information of the stream. When an EIT (Event Information Table) or the like written in the payload 103 exceeds 184 bytes, the stream is transmitted after it is divided into two or more transport stream packets. A bitstream of target program information (EIT) is obtained by combining the payloads of a plurality of transport stream packets having a target PID.

A transport scramble control is information on the scramble control, indicating whether the current packet has a scramble and indicating the type of the scramble when it has one.

An adaptation field control indicates whether the current packet has an adaptation field and whether the current packet has a payload.

A continuity indicator is a cyclic counter and is information used for detecting whether packets having the same PID have been discarded in part halfway. For detecting this, the continuity of the count is used.

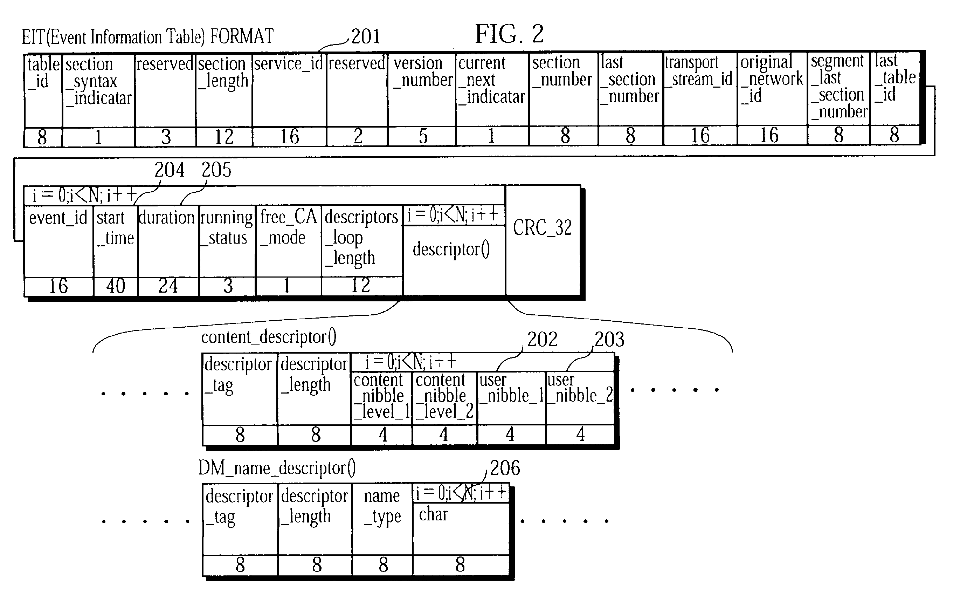

Now, the data structure of program information (EIT) written in the payload 103 will be described with reference to FIG. 2. The program information has different specifications for each broadcaster. FIG. 2 shows specifications for currently broadcast "SKYPerfectTV", a digital satellite broadcast. There are two sets of specifications for the service information (SI) for "SKYPerfectTV": DM_SI specifications; and JET specifications. In the present example, the DM_SI specifications are used.

To obtain the program information (EIT), a transport stream packet whose PID is 0x0012 is extracted from the transport stream transmitted from a satellite to obtain a bitstream conforming to the format shown in FIG. 2.

Each field of the EIT is defined as follows.

"Table_id" is an identification code of a table.

"Section_syntax_indicator" indicates whether the header of the current section is "long_form" or "short_form".

"Reserved" indicates an area allocated to store an extension of information that might be generated in future.

"Section_length" indicates the length of the current section ranging from immediately after this field to the end in units of bytes.

"Service_id" is a service identifier indicating a channel.

"Reserved" indicates an area allocated to store an extension of information that might be generated in future.

"Version_number" is a number that changes when the content of the current section changes.

"Current_next_indicator" shows whether the current section is effective. When this field contains "1", it indicates that the current section is effective.

"Section_number" indicates a section number.

"Last section_number" indicates the last section number in the "sub_table".

"Transport_stream id" is an identification code of the current transport.

"Original_network_id" indicates the "network_id" that is the source of a service re-transmitted from another network.

"Segment_last_section_number" indicates a section number in a segment.

"Last_table_id" is the same as the current "table_id" in correspondence to the "present_following_EIT" (short program information), and is "0xFF" in correspondence to the "schedule_EIT" (long program information).

"Event_id" is an identification code of an event (program).

"Start_time" indicates a program start time.

"Duration" indicates a scheduled program continuation time.

"Running_status" indicates an unused area.

"Free_CA_mode" has "0" indicating that the current service is non-scramble, or has "1" indicating that a part or all of the current service is under control of CA (Conditional Access).

"Descriptors_loop_length" indicates the length of the current descriptor ranging from immediately after this field to the end in units of bytes.

"Descriptor()" indicates that zero or more descriptor exists. The descriptor contains information that supplements the section information.

"CRC_32" shows an error detection code for entire section.

It should be noted here that "schedle_EIT" is classified into "general_EIT" (information other than detailed program information) and "detail_EIT" (detailed program information). Each EIT is identified as the short program information, long program information, or detailed program information in accordance with the "table_id". Each program is identified by the "service_id (channel)" and "event_id (program identifier)". Information such as the program name is written to the "descriptor()".

Each program name is written to "DM_name_descriptor". Each genre code is written to "content_descriptor".

Each field of "DM_name_descriptor" is defined as follows.

"Descriptor_tag" is an identification code of a descriptor.

"Descriptor_length" indicates the length of the current descriptor ranging from immediately after this field to the end in units of bytes.

"Name_type" has "1" indicating Japanese, or has "0" indicating English.

"Char" indicates a program name character sequence.

Each field of "content_descriptor" is defined as follows.

"Descriptor_tag" is an identification code of a descriptor.

"Descriptor_length" indicates the length of the current descriptor ranging from immediately after this field to the end in units of bytes.

"Content_nibble_level_1" and "content_nibble_level_2" are not used currently.

"User_nibble_1" indicates a genre code for a large item.

"User_nibble_2" indicates a genre code for a small item.

The program information is classified into: short program information (present_following_EIT) which contains information on the currently broadcast program and the next broadcast program; and long program information (schedule_EIT) contains all program information of approximately one week.

In a digital satellite broadcast "DIRECTV", the transfer capacity of the short program information is approximately 200KB; and the transfer capacity of the long program information is approximately 5MB since detailed contents of broadcast are included.

Typically, the short program information is transferred by all transponders. The long program information is transferred by a dedicated transponder. The transmission cycle of the short program information is as short as 1 to 4 seconds since the title of the currently broadcast program is displayed, and the transmission cycle of the long program information is as long as 4 to 10 seconds since the long program information is large in size.

The EIT of each channel is identified by table_id and service_id. The service_id indicates the broadcast channel. Each EIT contains several pieces of program information. Each piece of program information is identified by event_id.

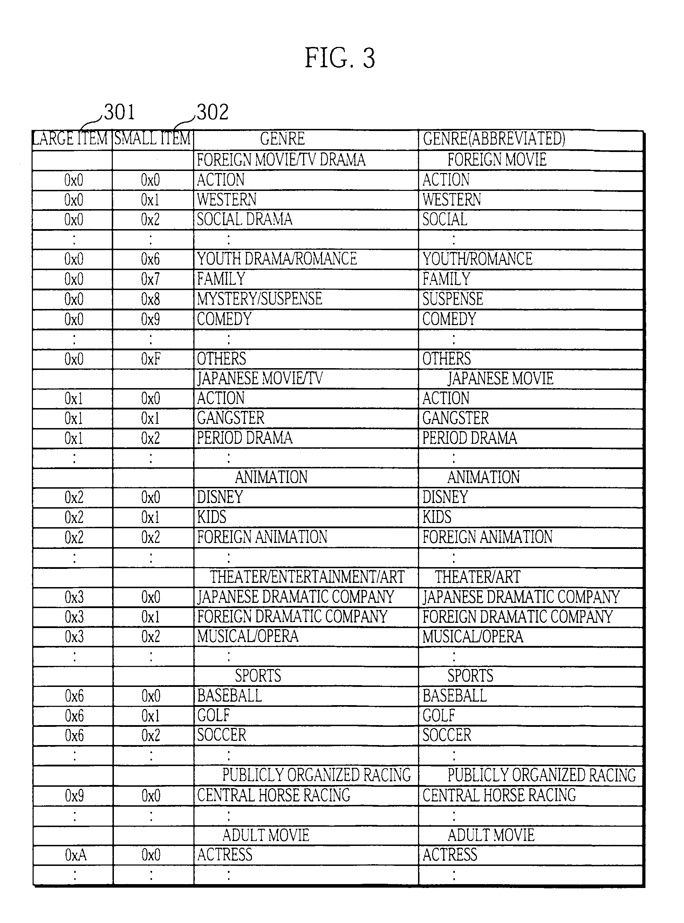

As shown in FIG. 3, the genre code includes a large item 301 and a small item 302 which are written respectively in the user_nibble_1 202 and the user_nibble_2 203. The small item indicates a detailed genre type. In the present definition, the genre of a program falls into any of 15 large items.

As described above, the genre code indicating the genre type is written to content_descriptor. The types and description methods for the genre code are defined for each broadcaster. FIG. 3 shows one example of genre codes for DIRECTV. In the present definition, the genre of a program falls into any of 11 large items.

When program information is searched using a genre specified by a viewer, it is impossible to obtain information of approximately 100 channels at once. Information of several channels is obtained per cycle at most. Accordingly, a lot of time is required to retrieve a program of a specific genre from long program information of one week for 100 channels.

The following are description of the present invention, the digital broadcast reception apparatus through specific embodiments thereof by way of referring to the drawings.

### <Embodiment 1>

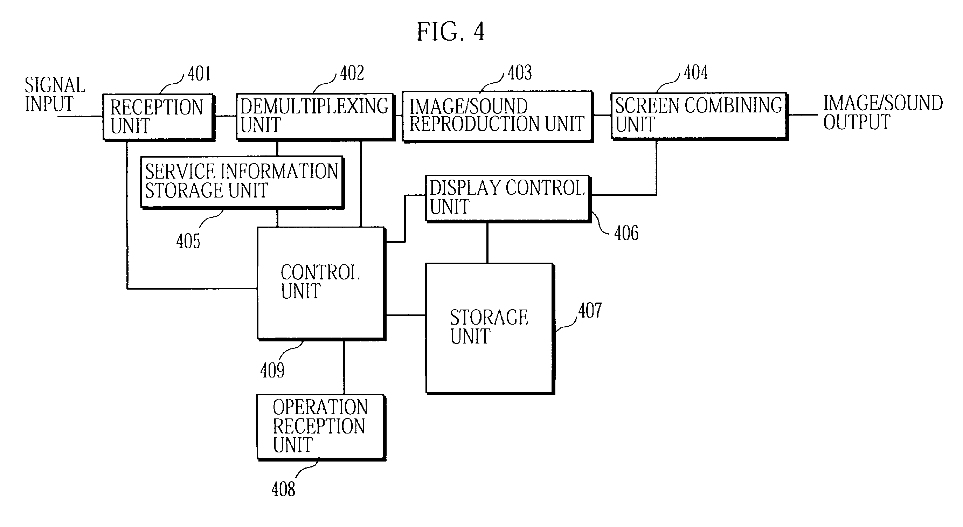

FIG. 4 shows the construction of the digital broadcast reception apparatus of the present invention in Embodiment 1. The digital broadcast reception apparatus includes a reception unit 401, a demultiplexing unit 402, an image/sound reproduction unit 403, a screen combining unit 404, a service information storage unit 405, a display control unit 406, a storage unit 407, an operation reception unit 408, and a control unit 409.

The reception unit 401 receives transport streams transmitted from satellites or the like. The control unit 409 specifies the transport streams the reception unit 401 should receive.

The demultiplexing unit 402 demultiplexes the transport streams received by the reception unit 401. The image data streams and sound data streams obtained through the demultiplexing are output to the image/sound reproduction unit 403. The packets of service information such as program specifications information and program information are stored in the service information storage unit 405 one by one. When one table is formed, the table is copied to the storage unit 407. The control unit 409 also selects the service information to be stored.

The image/sound reproduction unit 403 decodes the image data streams and sound data streams output from the demultiplexing unit 402, reproduces images and sounds, and outputs the reproduced images and sounds to the screen combining unit 404.

The screen combining unit 404 outputs the images of a program output from the image/sound reproduction unit 403 to an external display, and outputs the sounds to an external speaker. The screen combining unit 404 also combines display screens as a result of genre search generated by the display control unit 406, and outputs the combined screen to the external display.

The service information storage unit 405, being achieved by a RAM or the like, sequentially stores the packets of service information such as program information which have been demultiplexed by the demultiplexing unit 402. When one table is generated, the control unit 409 copies the table to the storage unit 407. After this copy, the service information is deleted from the service information storage unit 405.

The display control unit 406 generates a menu screen under control of the control unit 409. The display control unit 406 reads out a genre search result of a search through the program information in the storage unit 407, generates a display screen, and outputs the generated display screen to the screen combining unit 404.

The storage unit 407, being achieved by a RAM or the like, stores genre search results and a genre information database, where the genre information database shows relationships between the channels retrieved by the control unit 409 and the program genres, and the genre search result is program information retrieved from the long program information. The storage unit 407 is used to copy and analyze the table for each service information stored in the service information storage unit 405.

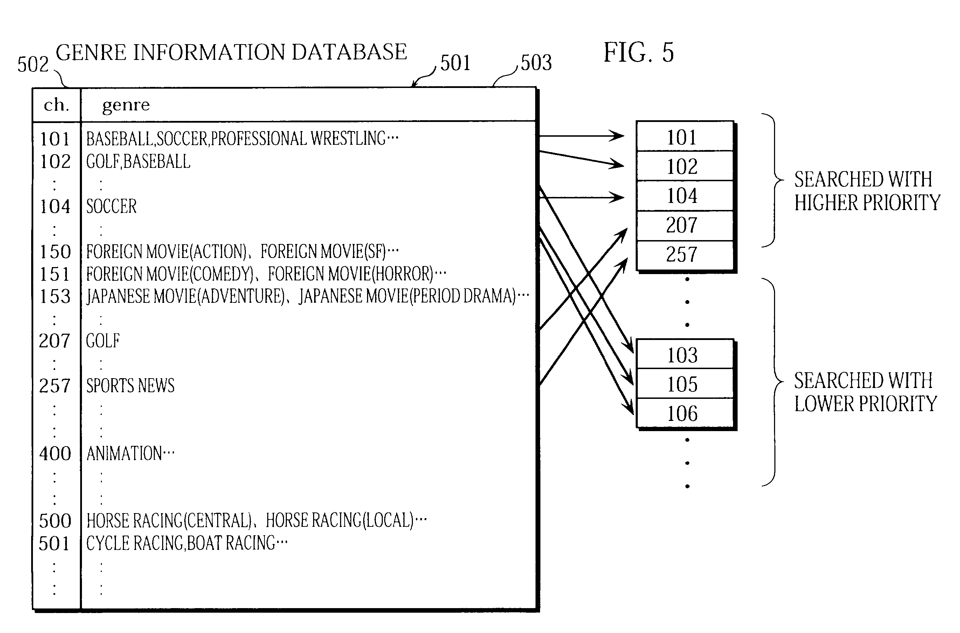

FIG. 5 shows the genre information database.

A database 501 includes a channel number column 502 and a genre column 503. The control unit 409 writes the contents of the service_id 201 of the short program information as the channel numbers into the channel number column 502, and writes the contents of the user_nibble_1 202 and the user_nibble_2 203 as the genres into the genre column 503. The contents of the user_nibble_1 202 and the user_nibble_2 203 of the long program information are also written in the genre column, and the written contents are updated (rewritten) each time the long program information is searched.

It should be noted here that though the genre column 503 of the database 501 in FIG. 5 includes character sequences representing genres for explanation's sake, but in reality, the genre column 503 includes genre codes as shown in FIG. 3.

The operation reception unit 408 is achieved by a signal reception unit which receives signals from a control panel of the digital broadcast reception apparatus or a remote controller, and receives instructions from the viewer. When the viewer selects a channel, the operation reception unit 408 conveys the channel number to the control unit 409. When the viewer instructs the genre search, the operation reception unit 408 notifies the control unit 409 of the instruction.

The control unit 409, being achieved by a microcomputer or the like, controls each unit of the digital data reception apparatus in accordance with a program recorded in a ROM.

The control unit 409, upon receipt of the notification of the channel number from the operation reception unit 408, refers to a PMT (Program Map Table) stored in the storage unit 407, and exercises a control so that the reception unit 401 receives a transport stream containing a program with the notified channel number.

The control unit 409, upon receipt of the instruction to display a menu, instructs the display control unit 406 to generate a menu screen. Similarly, upon receipt of the instruction to execute a genre search from the menu screen, the control unit 409 instructs the display control unit 406 to generate a genre search screen and instructs the demultiplexing unit 402 to demultiplex the short program information.

The control unit 409 copies the table for short program information stored in the service information storage unit 405 to the storage unit 407, extracts data from the service_id 201 and from the user_nibble_1 202 and the user_nibble_2 203 in the content_descriptor(), and writes the extracted data to the storage unit 407 as the genre information. The short program information from which data has been extracted is deleted. The control unit 409, which recognizes the total number of channels beforehand, extracts genre information for each channel, and when having completed the extraction, instructs the reception unit 401 to receive the transport stream containing the long program information.

The control unit 409, upon receipt of the notification of a genre from the operation reception unit 408, refers to the genre information stored in the storage unit 407 to detect a channel that corresponds to the notified genre, and instructs the demultiplexing unit 402 to demultiplex the long program information of the detected channel preferentially. The control unit 409 then copies the table for long program information of the detected channel stored in the service information storage unit 405 to the storage unit 407, and deletes the table for long program information from the service information storage unit 405. The control unit 409 extracts data from the service_id 201, the start_time 204, the duration 205, the user_nibble_1 202, the user_nibble_2 203, and the char 206, and writes the extracted data to the storage unit 407 as program information. The table for long program information from which data has been extracted is deleted from the storage unit 407. When the contents of the user_nibble_1 202 and the user_nibble_2 203 in the program information stored in the storage unit 407 are different from the notified genre, the control unit 409 writes the notified genre in correspondence to the channel in the genre information stored in the storage unit 407, and deletes the program information from the storage unit 407. After this operation, the program information contains only the program information of the genre specified by the user, and the genre information becomes a database with high accuracy, reflecting the long program information.

The control unit 409 writes the program information to the storage unit 407, and when there is no deletion, instructs the display control unit 406 to display the search result. When the program information has been searched completely concerning the channel detected from the genre information to be searched preferentially, the program information is searched concerning other channels. In this case, the control unit 409 first extracts data from the service_id 201, the user_nibble_1 202, and the user_nibble_2 203. The control unit 409 then extracts data from the start_time 204 and the like and writes the program information to the storage unit 407 and writes genre in correspondence to the current channel to the genre information when the data in 201 and 202 matches the notified genre. When the data in 201 and 202 does not match the notified genre and when the genre information does not contain the genre, the control unit 409 writes the genre to the genre information. When having written the program information, the control unit 409 instructs the display control unit 406 to display the search result.

Now, display screens for genre search displayed on an external display will be described with reference to examples.

When the operation reception unit 408 receives an instruction to display a menu screen from the viewer (e.g., pressing a "menu" button on the remote controller), the control unit 409 sends data for the menu screen to the display control unit 406. Upon receiving this data, the display control unit 406 generates the initial menu screen from the data for the menu screen, and instructs the external display to display the initial menu screen via the screen combining unit 404.

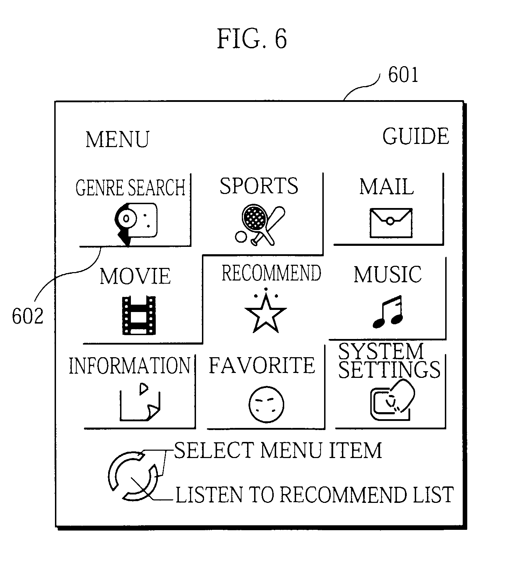

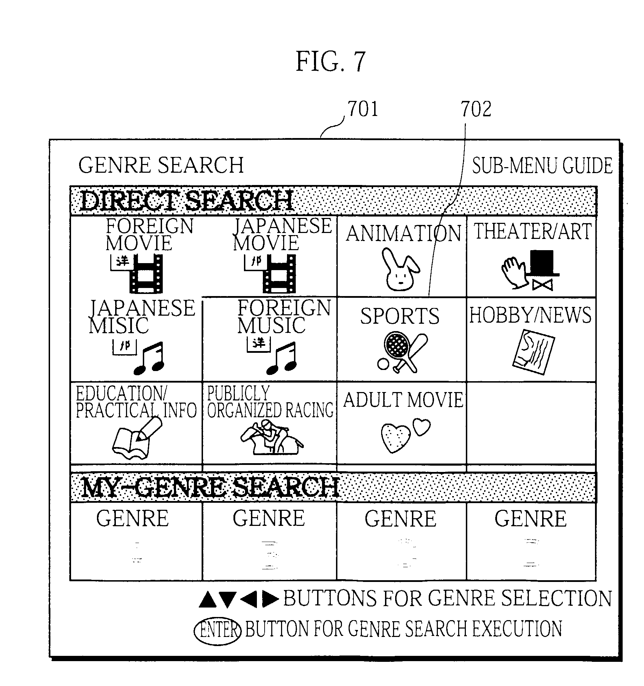

FIG. 6 shows the initial menu screen. When the viewer selects "genre search" 602 on the initial menu screen 601, the control unit 409 is notified of the instruction from the operation reception unit 408, and sends data for genre search screen to the display control unit 406. Upon receiving this data, the display control unit 406 generates the genre search screen 701 shown in FIG. 7 from the sent data for the genre search screen, and instructs the external display to display the genre search screen 701 via the screen combining unit 404.

Note that the control unit 409 starts extracting the genre information from the short program information when having received a notification that "genre search" 602 has been selected, where the genre information relates channels to genres. With this operation, the genre information database 501 shown in FIG. 5 is obtained and stored in the storage unit 407. When the viewer selects the genre "sports" 702 on the genre search screen 701, the control unit 409 searches the large item in the genre column 503 of the genre information database 501 for channel numbers containing genre code "0x6" that represents the genre "sports". As a result of this search, the control unit 409 detects channels 101, 102, 104, 207, and 257. Note that although the genre column 503 in FIG. 5 shows genres for the small item 302 shown in FIG. 3, the genre column 503 in reality contains genres for the large item 301.

The control unit 409 instructs the demultiplexing unit 402 to demultiplex the long program information of the detected channels 101, 102, 104, 207, and 257 preferentially. In this way, the control unit 409 extracts the program information of the detected channels 101, 102, 104, 207, and 257 in relation to the genre "sports" from the service information storage unit 405, and stores the extracted program information in the storage unit 407. The right-hand side of FIG. 5 shows the order of precedence for searching the long program information.

After the program information has been searched, the display control unit 406 reads out the program information from the storage unit 407, generates the genre search screen from the search result, and instructs the display to display the genre search screen via the screen combining unit 404.

As described above, in the present embodiment, channels related to the program information of the specified genre with high possibility are preferentially searched. As a result, the time taken for displaying the program information as the search result can be reduced.

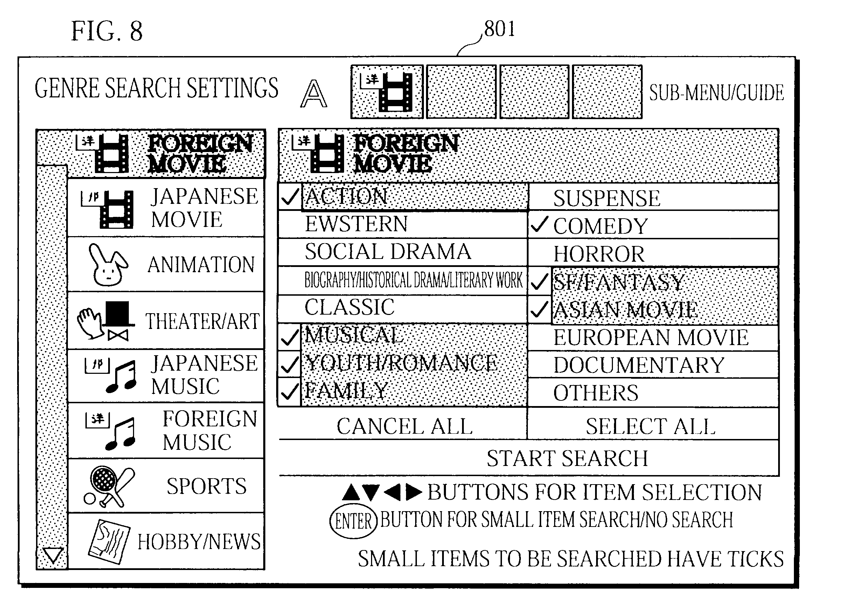

Note that although the genre search screen 701 shown in FIG. 7 shows genres for the large item, it may also show genres for the small item. FIG. 8 shows the search screen 801 displayed on the display for the viewer, who has selected the genre "foreign movies" 703 on the genre search screen 701 shown in FIG. 7, to select a genre for the small item.

When the viewer instructs to search the genres with ticks of the small item corresponding to the genre "foreign movies" of the large item, the control unit 409 detects channel numbers containing the specified genre information of the small item from the genre information database 501, searches the long program information of the detected channels, extracts the program information of the specified genres, and writes the extracted program information to the storage unit 407.

The display control unit 406 reads out the program information from the storage unit 407, generates the display screen of the genre search result, and instructs the display to display the screen via the screen combining unit 404.

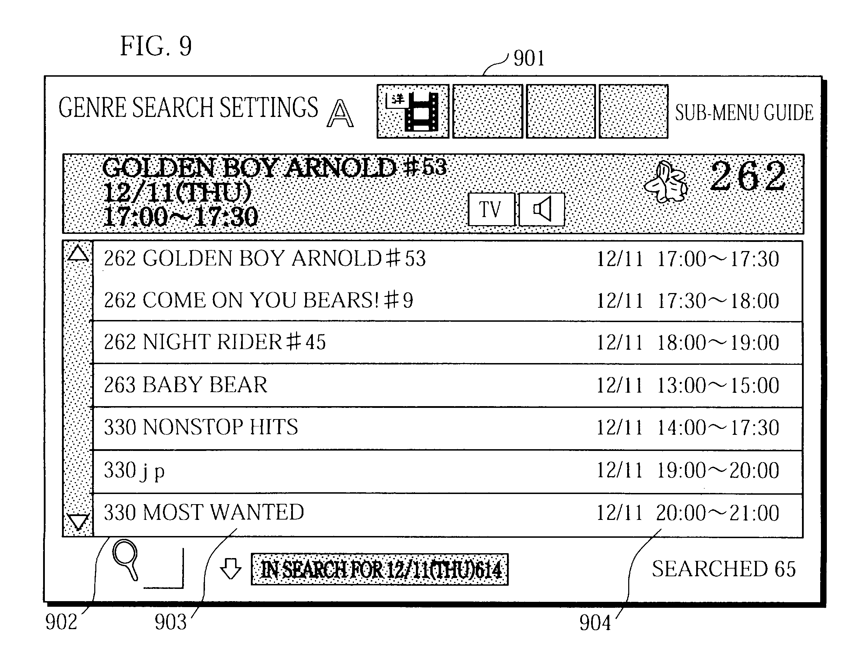

In case of the search screen 801 shown in FIG. 8, the display screen 901 shown in FIG. 9 is displayed as the genre search result. The display screen 901 as the genre search result is displayed as the search of the long program information for the preferential channels is complete, not after the control unit 409 has searched all the program information, which is also confirmed by "in search for 12/11 (Thu) 614" displayed at the lower part of the display screen 901. With this construction, the viewer can view the search result quickly after having specified genres of the desired programs. Note that in the display screen 901 as the genre search result, the channel numbers 902, program names 903, and broadcast dates 904 are displayed for each broadcast day as the program information.

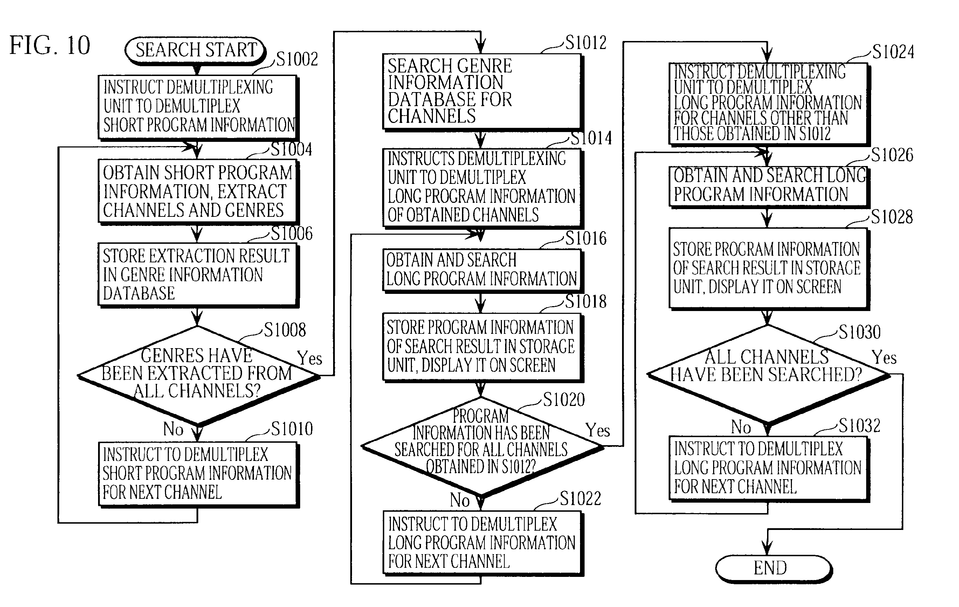

Now, the operation of the present embodiment will be described with reference to the flowchart shown in FIG. 10.

When receiving an instruction to display the initial menu screen and execute the genre search from the viewer, the control unit 409 instructs the demultiplexing unit 402 to demultiplex the short program information (S1002). The control unit 409 copies the table for short program information, which has been stored in the service information storage unit 405 by the demultiplexing unit 402, to the storage unit 407, and extracts a channel and genres from the table (S1004). The extraction results are accumulated in the genre information database 501 in the storage unit 407 (S1006). The control unit 409 judges whether genres have been extracted from all channels (S1008). When genres have not been extracted from all channels, the control unit 409 instructs the demultiplexing unit 402 to demultiplex the short program information for the next channel (S1010), and returns to S1004.

When genres have been extracted from all channels, the control unit 409 searches the genre information database 501 for channels having the genres specified by the viewer (S1012). The control unit 409 instructs the demultiplexing unit 402 to demultiplex the long program information of the detected channels (S1014).

The control unit 409 copies the table for long program information, which has been stored in the service information storage unit 405 by the demultiplexing unit 402, to the storage unit 407, and searches the table for the program information having the matching genres (S1016). The program information as the search results is stored in the storage unit 407, the display control unit 406 displays the program information (S1006). The display control unit 406 reads out the program information from the storage unit 407, generates a genre search result display screen, and instructs the display to display the generated screen (S1018).

The control unit 409 judges whether the program information has been searched for all the channels detected in S1012 (S1020). When the program information has not been searched for all the channels, the control unit 409 instructs the demultiplexing unit 402 to demultiplex the long program information for the next channel (S1022), and returns to S1016.

When the program information has been searched for all the channels, the control unit 409 instructs the demultiplexing unit 402 to demultiplex the long program information for the other channels (S1024).

The control unit 409 copies the table for long program information, which has been stored in the service information storage unit 405 by the demultiplexing unit 402, to the storage unit 407, and searches the table for the program information having the matching genres (S1026). The program information as the search results is stored in the storage unit 407, the display control unit 406 displays the program information. The display control unit 406 reads out the program information from the storage unit 407, generates a genre search result display screen, and instructs the display to display the generated screen (S1028).

The control unit 409 judges whether the program information has been searched for all the channels (S1030). When the program information has not been searched for all the channels, the control unit 409 instructs the demultiplexing unit 402 to demultiplex the long program information for the next channel (S1032), and returns to S1026. When the program information has been searched for all the channels, process ends.

Note that in S1016 and S1026, when the control unit 409 finds a genre which is not written in the genre information database 501 while searching the long program information for program information having matching genres, the control unit 409 writes the newly found genre to the genre information database 501 in correspondence to channel numbers.

In the above embodiment, upon receipt of an instruction from the viewer, the control unit 409 instructs the demultiplexing unit 402 to demultiplex the short program information, and stores the genre information in the storage unit 407 as database, where the genre information relates channels to genres. However, as another embodiment, the genre information which relates channels to genres may be stored in the storage unit 407 as a database from the short program information before the viewer instructs to execute a genre search.

More specifically, as described above, since the short program information is multiplexed into all transport streams, the demultiplexing unit 402 may demultiplex the short program information while the program is viewed or during a wait time in which the digital broadcast reception apparatus is live, and the demultiplexed short program information may be stored in the service information storage unit 405 so that the control unit 409 stores the genre information, which relates channels to genres, in the storage unit 407 as a database. With this construction, upon receipt of genres specified by the viewer, the digital broadcast reception apparatus can immediately obtain the long program information for channels to be searched preferentially and extract the program information.

### <Embodiment 2>

The digital broadcast reception apparatus as the second embodiment of the present invention will be described. The construction of the second embodiment is similar to the first embodiment. Therefore, only the components unique to the second embodiment will be described with reference to FIG. 4.

The reception unit 401 receives transport streams. The SDT containing the channel list and the channel details information are multiplexed in the transport streams. The channel list introduces channel names. The channel details information introduces the characteristics of each channel.

The demultiplexing unit 402 demultiplexes SDT packets from the transport streams in accordance with instructions by the control unit 409.

The screen combining unit 404 combines display screens of the channel list, channel details information, and genre-specific channel list generated by the display control unit 406, and outputs the combined screen to the external display.

The service information storage unit 405 sequentially stores the SDT packets demultiplexed by the demultiplexing unit 402. When one table is generated, the control unit 409 copies the table to the storage unit 407.

The display control unit 406, upon receipt of an instruction to generate the channel list, reads out the content of the SDT stored in the storage unit 407, extracts genres of the channels written in the SDT from the genre information database stored in the storage unit 407, and generates a display screen of the channel list. Note that the genres extracted from the genre information database may be a genre which has been searched the largest number of times for each channel in the genre information database.

The display control unit 406, upon receipt of an instruction to generate the channel details information, reads out the content of the SDT stored in the storage unit 407, extracts genres of the programs of the channels from the genre information database, and generates a display screen of the channel details information.

The display control unit 406, upon receipt of specification of genres and an instruction to generate the genre-specific channel list, reads out the channels of the specified genres from the genre-specific channel table stored in the storage unit 407, extracts channel names or the like of the genres from the SDT, and generates the genre-specific channel list.

The display control unit 406 outputs the generated channel list, channel details information, or genre-specific channel list to the screen combining unit 404.

The storage unit 407 stores the SDT table and database of the genre information.

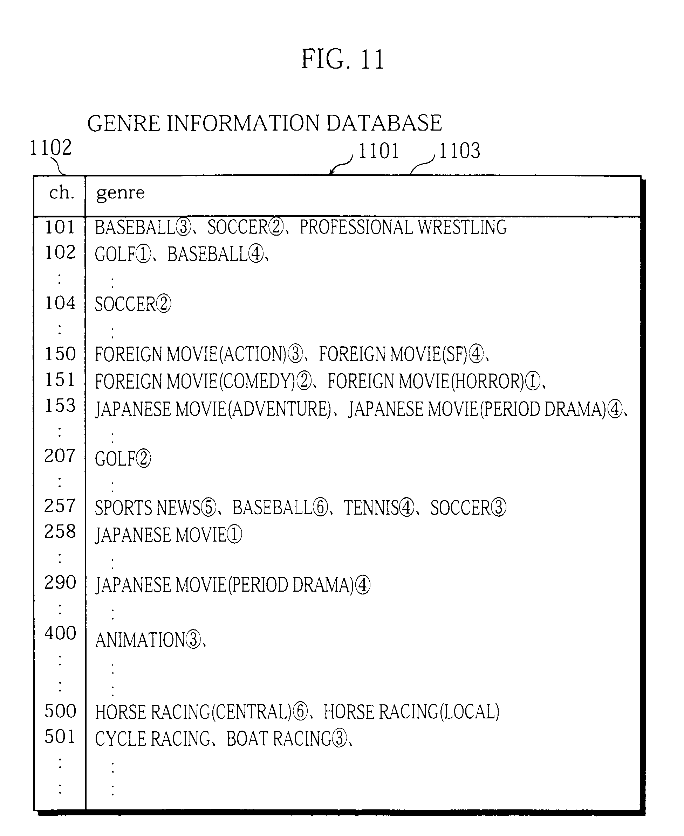

FIG. 11 shows the genre information database of the present embodiment in which the number of searches is written for each genre. The genre information database 1101 includes a program genre 1103 for each channel 1102. An encircled numeral is attached to each genre to show the number of searches. Note that the number of searches is added by one by the control unit 409 each time the program information is searched in terms of the genre.

The storage unit 407 stores the genre-specific channel table which is generated by the control unit 409. The genre-specific channel table shows channels classified for each genre based on the genre information 1101.

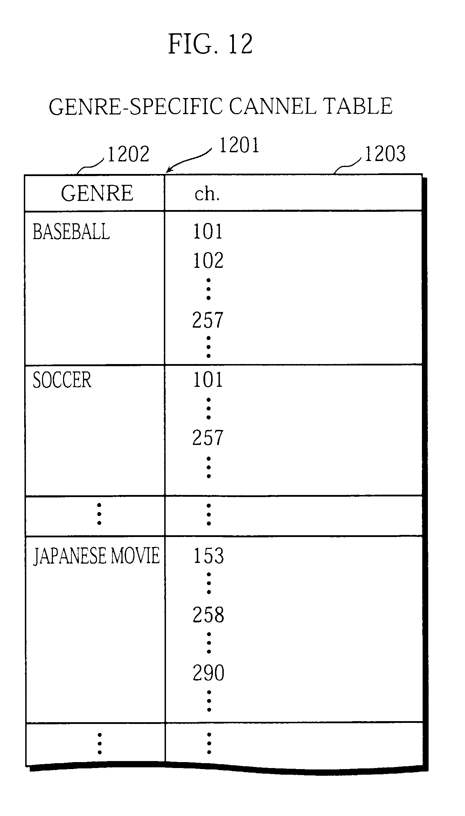

FIG. 12 shows an example of the genre-specific channel table 1201. The genre-specific channel table 1201 shows channels 1203 that broadcast the programs of the genres 1202.

When the viewer instructs to display the channel list, the operation reception unit 408 notifies the control unit 409 of the instruction. When the viewer instructs to display the channel details information, the operation reception unit 408 notifies the control unit 409 of the instruction. When the viewer specifies genres and instructs to display the genre-specific channel list, the operation reception unit 408 notifies the control unit 409 of the instruction.

The control unit 409 writes the number of searches for a searched genre onto the genre information database each time the program information of the genre information database is searched. With this construction, the genre information database 1101 is obtained.

The control unit 409 instructs the demultiplexing unit 402 to demultiplex the packets of the SDT. The control unit 409 copies the SDT to the storage unit 407 when a table of SDT is formed in the service information storage unit 405.

The control unit 409 refers to the genres 1103 corresponding to the channels 1102 in the genre information database 1101 to extract genres one by one, extracts channels including the genre in order of the channels numbers, and writes the genre-specific channel list to the storage unit 407, the genre-specific channel table showing channels for each genre. With this, the genre-specific channel table 1201 shown in FIG. 12 is obtained.

The control unit 409, upon receipt of specification of genres and the instruction to display the genre-specific channel list from the operation reception unit 408, instructs the display control unit 406 to generate the genres and the genre-specific channel list.

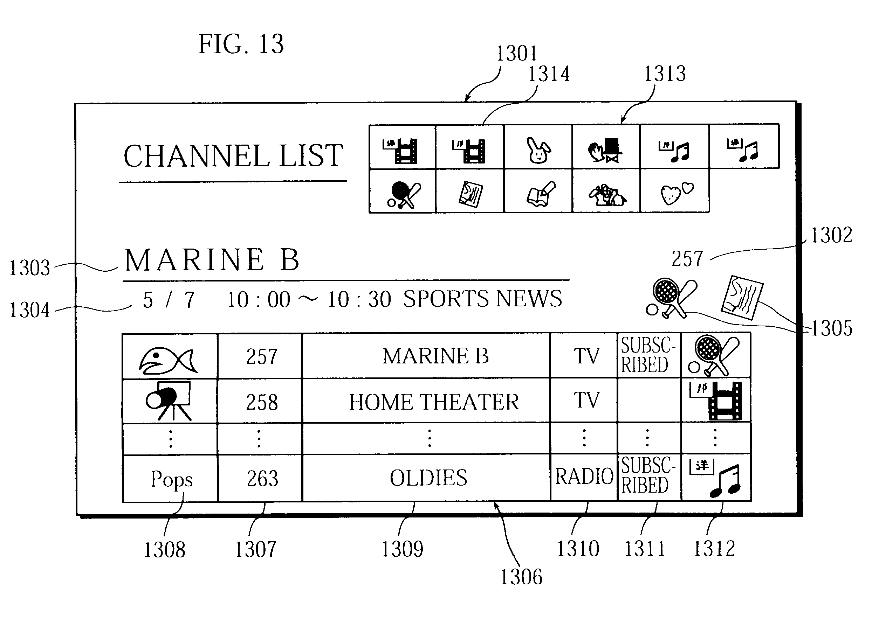

When the operation reception unit 408 receives an instruction to display the menu screen from the viewer, the external display displays the initial menu screen 601. When the operation reception unit 408 further receives selection of the menu from the viewer and an instruction to display the channel list, the display displays the screen shown in FIG. 13 which is an output from the screen combining unit 404.

The display screen 1301 includes the channel number 1302 and the channel name of the currently received channel, and the program information 1304 of the currently broadcast program. Near the channel number 1302, icons 1305 indicating major genres of the channel are displayed.

The channel list 1306 is displayed at the lower part of the display screen 1301. The channel list 1306 includes channel numbers 1307, and, for each channel number, a logo 1308 and a channel name 1309 of the channel, a TV/radio type 1310, a flag 1311 indicating whether the viewer has subscribed to the channel, and an icon 1312 indicating the genre of the channel.

It should be noted here that the icon 1312 in FIG. 13 indicates the genre that has been searched the largest number of times among the genres corresponding to the channel, the genre having been selected by the display control unit 406 from the genre information database 1101.

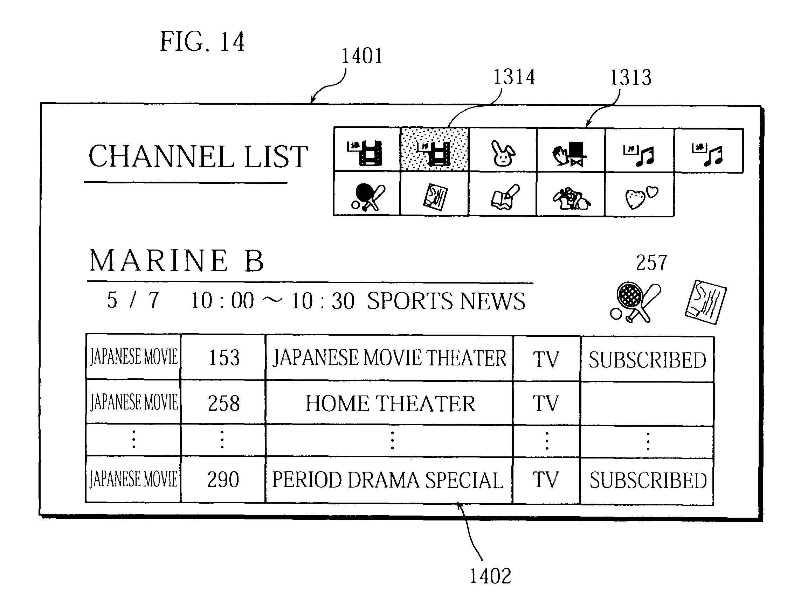

A genre-specific icon list 1313 is displayed at the right upper side of the display screen 1301. When the viewer selects the icon 1314 indicating Japanese movies on the screen, the genre-specific channel list shown in FIG. 14 is displayed.

The selected icon 1314 is focused on the display screen 1401, and the channel list 1402 for the Japanese movies is displayed as shown in FIG. 14.

In displaying the screen, the display control unit 406 first receives an instruction with specification of the genre "Japanese movies" by the viewer from the operation receiving unit 408 via the control unit 409, then sequentially reads out the channel numbers 1203 written in "Japanese movies" of the genre 1202 of the genre-specific channel table 1201 stored in the storage unit 407, reads the channel name, TV/radio type, and information on whether the viewer has subscribed to the channel from the SDT, and generates the channel list 1402. It should be noted here that whether the viewer has subscribed to the channel is judged by referring to CAT (Conditional Access Table) or the like, in reality. However, this will not be explained in detail since it is not essentially relevant to the present invention.

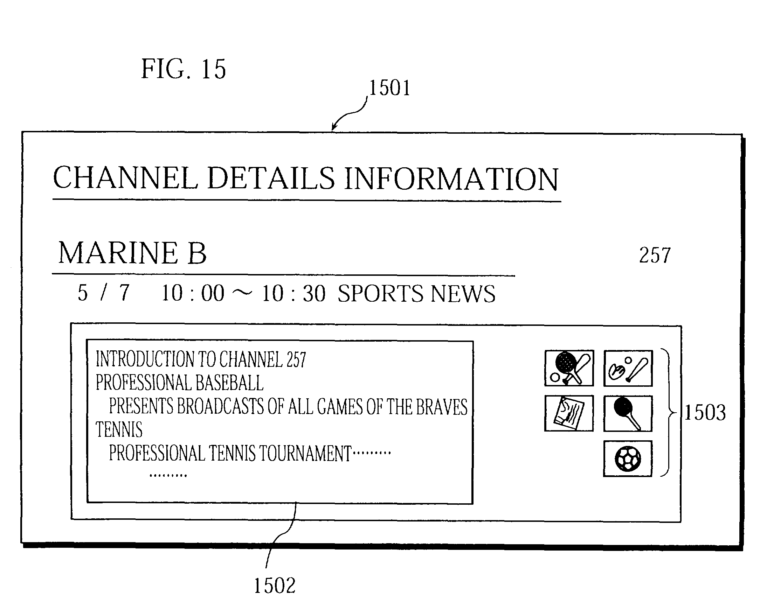

When the operation receiving unit 408 receives an instruction to display the channel details information from the viewer, the display displays the output from the screen combining unit 404 as the display screen shown in FIG. 15.

The display screen 1501 includes the channel details information 1502 which is currently displayed. The display screen 1501 also includes an icon group 1503 indicating the genres of the programs of the channel.

The icon group 1503 is generated by the display control unit 406 by extracting the genres of the channel from the genre information database 1101 stored in the storage unit 407. In FIG. 15, icons for all the genres of the programs broadcast in the channel are displayed. However, one icon indicating the genre which has been searched the largest number of times may be displayed.

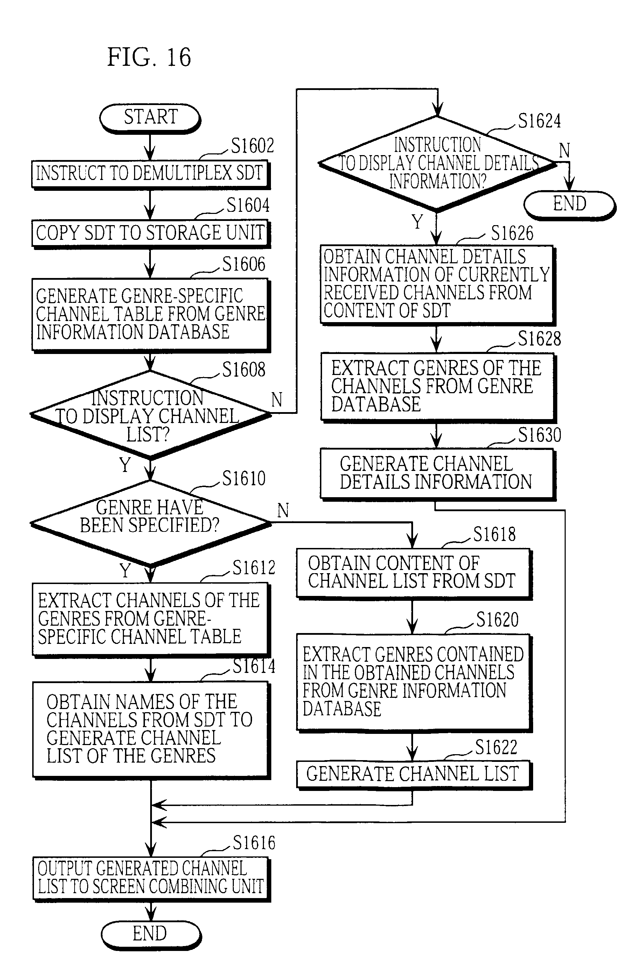

Now, the operation of the present embodiment will be described with reference to the flowchart shown in FIG. 16.

Note that the number of genre searches is written to the genre information database 1101 shown in FIG. 11 as follows. In step 1018 of the flowchart (FIG. 10) for Embodiment 1, the control unit 409 increments the number of genre searches by one in the genre information database 1101 when storing the program information as the search result.

The control unit 409 instructs the demultiplexing unit 402 to demultiplex the SDT (S1602). The control unit 409 then copies the SDT packets to the storage unit 407 as the SDT table from the service information storage unit 405 (S1604).

The control unit 409 generates the genre-specific channel table 1201 based on the genre information database 1101 stored in the storage unit 407, and stores the generated table 1201 in the storage unit 407 (S1606).

The control unit 409 then judges whether an instruction to display the channel list has been sent from the operation receiving unit 408 (S1608). When having affirmed it, the control unit 409 judges whether genres have been specified (S1610).

The display control unit 406 extracts the channels of the genres from the genre-specific channel table 1201 one by one in accordance with the specification by the control unit 409 (S1612), obtains the names of the channels from the SDT stored in the storage unit 407, and generates the channel list of the genres (S1614).

The display control unit 406 outputs the generated channel list to the screen combining unit (S1616), and ends the process.

When having judged negatively in S1610, the control unit 409 instructs the display control unit 406 to combine the channel list.

The display control unit 406 obtains the content of the channel list from the SDT stored in the storage unit 407 (S1618), and extracts the genres contained in the obtained channels from the genre information database 1101 (S1620). The display control unit 406 then generates the channel list to which genres have been added for each channel (S1622), and outputs the generated channel list to the screen combining unit 404 (S1616).

When having judged negatively in S1608, the control unit 409 judges whether an instruction to display the channel details information has been sent (S1624). When it is judged as negative, the process ends; and when it is judged as positive, the control unit 409 instructs the display control unit 406 to generates the channel details information for the currently received channels.

The display control unit 406 obtains the channel details information of the currently received channels from the content of the SDT stored in the storage unit 407 (S1626), extracts the genres of the channels from the genre database 1101 (S1628), generates the channel details information to which genres have been added (S1630), and outputs the generated channel details information to the screen combining unit 404 (S1616).

As described above, icons are displayed in the channel list or the channel details information, and the viewers can recognize the genres of programs broadcast on the channels at a glance by looking at the icons. This improves the convenience to the viewers. The viewers can also recognize the channels that broadcast the programs of the specified genres using the genre-specific channel table 1201 generated based on the genre information database 1101.

In the present embodiment, a genre having been searched the largest number of times is displayed on the channel list or the like. However, other variations are possible. For example, since the genre information database 1101 has one record per one channel, when searching the genre information database 1101, the control unit 409 may place the genres it has searched at the start of the records. It may then be arranged so that the genres placed at the start of the records (i.e., the genres most recently searched) may be displayed on the channel list or the like.

In the present embodiment, only the genres specified by the viewer are displayed on the genre-specific channel list. However, channel lists may be displayed sequentially for each genre. Alternatively, a genre-specific channel list may be generated beforehand in which the genres are arranged in the order of the number of searches, and the channel list may be displayed sequentially for each of the genres in a descending order of the number of searches of the genres.

In the present embodiment, it is presumed that the genre information database is generated in the same way as Embodiment 1. However, in generation of the genre information database 1101, the relationships between the channels and genres may be extracted from the short program information first, then the control unit 409 may write the number of views of the genres in correspondence to the genres to the genre information database 1101.

In the present embodiment, the digital broadcast reception apparatus has the construction shown in FIG. 4. However, the functions of the control unit 409, the display control unit 406 or the like may be achieved in a computer by a program. By achieving the program by a carrier wave or by recording the program in a computer-readable record medium such as an IC card, optical disc, a floppy disk or the like, and by allowing the program to be downloaded into such a digital broadcast reception apparatus as has neither a function to search the program information for desired genres at high speeds nor a function to display genres with the channel list, these functions are made available.

The present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A digital broadcast reception apparatus for receiving transport streams, demultiplexing broadcast programs, a present_following_EIT, and a schedule_EIT multiplexed in the received transport streams, and outputting the demultiplexed broadcast programs to an output apparatus, characterized by comprising:
an extracting means for extracting channels with corresponding genres of the broadcast programs from the present_following_EIT;
a genre receiving means for receiving, from a viewer, specification of a genre of broadcast programs that the viewer wishes to search;
a broadcast program information search means for, when any of the genres extracted by the extracting means matches the genre received by the genre receiving means, performing a search of the schedule_EIT to find program information of broadcast programs belonging to the received genre, the search commencing with channels that corresponds to the matched genre among the channels extracted by the extracting means; and
a display control means for allowing the output apparatus to display a result of the search performed by the broadcast program information search means.

2. The digital broadcast reception apparatus of Claim 1, characterized by further comprising:
a database in which relationships between the channels and the genres are written, wherein
the present_following_EIT is multiplexed into the transport stream together with all broadcast programs,
the extracting means extracts genres in correspondence to channels that transfer the broadcast programs, beforehand (1) while broadcast programs are being output, or (2) during standby, and writes the relationships between the channels and the genres into the database, and
the broadcast program information search means, when the genre receiving means has received specification of a genres, refers to the database and detects channels to be searched preferentially.

3. The digital broadcast reception apparatus of Claim 2, characterized in that:
the broadcast program information search means includes
an extraction unit for extracting channels and genres by relating them to each other from the schedule_EIT, wherein
the broadcast program information search means writes the channels and the genres related to each other by the extraction unit into the database.

4. The digital broadcast reception apparatus of one of Claims 1 to 3, characterized in that:
the genre receiving means, when having received a search instruction from the viewer, instructs the display control means to display a menu screen which shows genres of broadcast programs, and the display control means does not allow the output apparatus to display the result of the search.

5. The digital broadcast reception apparatus of one of Claims 1 to 4, characterized in that:
the display control means starts displaying the result of the search as soon as the broadcast program information search means finds program information of a broadcast program belonging to the matched genre.

6. The digital broadcast reception apparatus of Claim 2 further demultiplexing SDTs (Service Descriptor Tables) multiplexed in the received transport streams, and outputting a channel list or channel details information to the output apparatus, the digital broadcast reception apparatus being characterized by further comprising
a genre adding means for extracting genres corresponding to channels from the database, and adding genres corresponding to channels contained in the channel list or the channel details information.

7. The digital broadcast reception apparatus of Claim 6, characterized in that
the broadcast program information search means writes the number of genre searches for each genre into the database in correspondence to channels when searching broadcast program information for broadcast programs that belong to the genre specified by the viewer, and
the genre adding means extracts a genre having the highest number of genre searches.

8. The digital broadcast reception apparatus of Claim 6, characterized in that
the broadcast program information search means arranges the database so that a most recently searched genre can be identified for each channel, and
the genre adding means extracts a genre that has been searched most recently from the database.

9. The digital broadcast reception apparatus of Claim 6, characterized by further comprising:
a genre-specific channel table generating means for generating a genre-specific channel table from the database, the genre-specific channel table showing relationships between genres and channels; and
a channel list generating means for generating channel lists one by one in correspondence to the genres written in the genre-specific channel table.

10. The digital broadcast reception apparatus of Claim 9, characterized in that
the broadcast program information search means writes the number of genre searches for each genre into the database in correspondence to channels when searching broadcast program information for broadcast programs that belong to the genre specified by the viewer,
the genre-specific channel table generating means generates the genre-specific channel table by entering information of genres in a descending order of the number of genre searches, and
the channel list generating means generates the channel lists for genres one by one in a descending order of the number of genre searches.

11. The digital broadcast reception apparatus of Claim 9, characterized by further comprising:
a genre specification receiving means for receiving, from the viewer, specification of a genre corresponding to channel lists that the viewer wishes to diaplay, wherein
the channel list generating means reads out channels corresponding to the genre received by the genre specification receiving means, from the genre-specific channel table, and generates channel lists one by one in correspondence to the genre received by the genre specification receiving means.

12. A computer-readable record medium which is applied to a digital broadcast reception apparatus for receiving transport streams, demultiplexing broadcast programs, present_following_EIT, and schedule_EIT multiplexed in the received transport streams, outputting the demultiplexed broadcast programs to an output apparatus, the computer-readable record medium recording a program that allows a computer to achieve functions of the following means:
an extracting means for extracting channels with corresponding genres of the broadcast programs from the present_following_EIT;
a genre receiving means for receiving, from a viewer, specification of a genre of broadcast programs that the viewer wishes to search;
a broadcast program information search means for, when any of the genres extracted by the extracting means matches the genre received by the genre receiving means, performing a search of the schedule_EIT to find program information of broadcast programs belonging to the received genre, the search commencing with channels that corresponds to the matched genre among the channels extracted by the extracting means; and
a display control means for allowing the output apparatus to display a result of the search performed by the broadcast program information search means.

13. The computer-readable record medium of Claim 12, wherein the program further allows the computer to achieve:
the present_following_EIT is multiplexed into the transport stream together with all broadcast programs,
the extracting means extracts genres in correspondence to channels that transfer the broadcast programs, beforehand (1) while broadcast programs are being output, or (2) during standby, and writes the relationships between the channels and the genres into the database, and
the broadcast program information search means, when the genre receiving means has received specification of a genres, refers to the database and detects channels to be searched preferentially.

14. The computer-readable record medium of Claim 13, wherein the program further allows the computer to achieve:
an extraction unit for extracting channels and genres by relating them to each other from the schedule_EIT, wherein
the broadcast program information search means writes the channels and the genres related to each other by the extraction unit into the database.

15. The computer-readable record medium of one of Claims 12 to 14, wherein the program further allows the computer to achieve:
the genre receiving means, when having received a search instruction from the viewer, instructs the display control means to display a menu screen which shows genres of broadcast programs, and the display control means does not allow the output apparatus to display the result of the search.

16. The computer-readable record medium of one of Claims 12 to 15, wherein the program further allows the computer to achieve:
the display control means starts displaying the result of the search as soon as the broadcast program information search means finds program information of a broadcast program belonging to the matched genre.

17. The computer-readable record medium of Claim 13 which is applied to a digital broadcast reception apparatus which demultiplexes SDTs (Service Descriptor Tables) multiplexed in the received transport streams, and outputs a channel list or channel details information to the output apparatus, the program being characterized by further allowing the computer to achieve:
a genre adding means for extracting genres corresponding to channels from the database, and adding genres corresponding to channels contained in the channel list or the channel details information.

18. The computer-readable record medium of Claim 17, wherein the program further allows the computer to achieve:
a genre-specific channel table generating means for generating a genre-specific channel table from the database, the genre-specific channel table showing relationships between genres and channels; and
a channel list generating means for generating channel lists one by one in correspondence to the genres written in the genre-specific channel table.

19. A program which allows a computer to achieve functions of the following means of a digital broadcast reception apparatus for receiving transport streams, demultiplexing broadcast programs, present_following_EIT, and schedule_EIT multiplexed in the received transport streams, outputting the demultiplexed broadcast programs to an output apparatus, the program being achieved by a carrier or a record medium:
an extracting means for extracting channels with corresponding genres of the broadcast programs from the present_following_EIT;
a genre receiving means for receiving, from a viewer, specification of a genre of broadcast programs that the viewer wishes to search;
a broadcast program information search means for, when any of the genres extracted by the extracting means matches the genre received by the genre receiving means, performing a search of the schedule_EIT to find program information of broadcast programs belonging to the received genre, the search commencing with channels that corresponds to the matched genre among the channels extracted by the extracting means; and
a display control means for allowing the output apparatus to display a result of the search performed by the broadcast program information search means.

20. The program of Claim 19 further allowing the computer to achieve:
the present_following_EIT is multiplexed into the transport stream together with all broadcast programs,
the extracting means extracts genres in correspondence to channels that transfer the broadcast programs, beforehand (1) while broadcast programs are being output, or (2) during standby, and writes the relationships between the channels and the genres into the database, and
the broadcast program information search means, when the genre receiving means has received specification of a genres, refers to the database and detects channels to be searched preferentially.

21. The program of Claim 20 further allowing the computer to achieve:
an extraction unit for extracting channels and genres by relating them to each other from the schedule_EIT, wherein
the broadcast program information search means writes the channels and the genres related to each other by the extraction unit into the database.

22. The program of one of Claims 19 to 21 further allowing the computer to achieve:
the genre receiving means, when having received a search instruction from the viewer, instructs the display control means to display a menu screen which shows genres of broadcast programs, and the display control means does not allow the output apparatus to display the result of the search.

23. The program of one of Claims 19 to 22 further allowing the computer to achieve:
the display control means starts displaying the result of the search as soon as the broadcast program information search means finds program information of a broadcast program belonging to the matched genre.

24. The program of Claim 20 allowing the computer to achieve functions of each means of a digital broadcast reception apparatus which demultiplexes SDTs (Service Descriptor Tables) multiplexed in the received transport streams, and outputs a channel list or channel details information to the output apparatus, the program being characterized by further allowing the computer to achieve:
a genre adding means for extracting genres corresponding to channels from the database, and adding genres corresponding to channels contained in the channel list or the channel details information.

25. The program of Claim 24 further allowing the computer to achieve:
a genre-specific channel table generating means for generating a genre-specific channel table from the database, the genre-specific channel table showing relationships between genres and channels; and
a channel list generating means for generating channel lists one by one in correspondence to the genres written in the genre-specific channel table.
